# EUROPÄISCHE PATENTSCHRIFT

(11) **EP 0 538 290 B1**
(45) Veröffentlichungstag und Bekanntmachung des Hinweises auf die Patenterteilung: **20.05.1998**
(21) Anmeldenummer: 91911878.6
(22) Anmeldetag: 26.06.1991
(51) Int. Cl.: H04L 25/49

(54) **DEMODULATOR FÜR EINEN m/n-CODE**
DEMODULATOR FOR AN m/n-CODE
DEMODULATEUR D'UN CODE m/n

(30) Priorität: 04.07.1990 DE 4021343
(43) Veröffentlichungstag der Anmeldung: 28.04.1993
(73) Patentinhaber: DEUTSCHE THOMSON-BRANDT GMBH, 78048 Villingen-Schwenningen (DE)
(72) Erfinder: SCHOLZ, Werner, D-3007 Gehrden (DE)
(74) Vertreter: Hartnack, Wolfgang, Dipl.-Ing.
(86) Internationale Anmeldenummer: EP9101195
(87) Internationale Veröffentlichungsnummer: WO9201349

(56) Entgegenhaltungen:
- US-A- 3 685 033
- PROCEEDINGS OF THE 1989 BIPOLAR CIRCUITS AND TECHNOLOGY MEETING, 18TH-19TH SEPTEMBER 1989 MINNEAPOLIS, US Seiten 288 - 290; R. C. WALKER ET AL.: 'A chipset for Gigabit Rate Data Communication '

## Beschreibung

Die Erfindung geht aus von einem Demodulator gemäß dem Oberbegriff des Anspruchs 1.

Für die Demodulation eines mit einem m/n-Code modulierten Signals kann es vorteilhaft sein, wenn die Demodulationstabelle für Codewörter aufgestellt ist, die gegenüber den n-bit Codewörtern der Modulationstabelle verändert sind.

Bei R-DAT wird eine 8/10-Modulation mit NRZI-Wandlung verwendet. Das NRZI-Signal hat den Vorteil, daß die Information polaritätsunabhängig ist. Ein Nachteil liegt allerdings darin, daß dieser Übertragungscode nicht frei von Fehlerfortpflanzung ist. In der am 17.10.91 veröffentlichten DE-OS 40 11 894 wird daher vorgeschlagen, einen 8/10 Code ohne NRZI-Wandlung zu verwenden und eine automatische Polaritätskorrektur mit Hilfe von Signalen zur Polaritätsidentifizierung durchzuführen.

Bei einem Demodulator für diesen 8/10-Code ist z.B. die Erkennung der Synchronmuster polaritätsunabhängig, indem die Pegelübergänge ausgewertet werden, während die Auswertung des Datensignals polaritätsabhängig ist, indem die Bitwerte benutzt werden. In der Demodulationsschaltung sind dann getrennte Seriell-Parallel-Wandler für das Signal, das das Pegelübergangsmuster darstellt, und für das Signal, das das Bitmuster darstellt, erforderlich.

Der Erfindung liegt die Aufgabe zugrunde, bei dem beschriebenen Demodulator eine gemeinsame Ausnutzung der Auswertschaltungen und dadurch eine Einsparung von Bauteilen zu erreichen.

Diese Aufgabe wird durch die im Anspruch 1 angegebene Erfindung gelöst. Vorteilhafte Weiterbildungen der Erfindung sind in den Unteransprüche angegeben.

Bei der erfindungsgemäßen Lösung wird somit durch eine Änderung der Software eine Einsparung an Hardware erreicht, nämlich eine Einsparung an Bauteilen durch gemeinsame Ausnutzung der Auswertschaltungen, während die Änderung der Demodulationstabelle, d.h. des Inhalts eines ROMS, keinen Mehraufwand an Hardware bedeutet.

Es ist bekannt (US 3,685,033), daß ein System Datenblocks dekodiert und in eine Reihenfolge von N-Bit hinär Informationen umwandelt.

Es ist auch bekannt (PROCEEDINGS) THE 1989 BIPOLAR CIRCUITS AND TECHNOLOGY MEETING, 18th - 19th Sep. 1989 Minneapolis, US Seiten 288 - 290), daß bei der Datenübertragung nur 1 Bit benötigt wird, um die Polarität eines Datenwortes anzuzeigen.

Die Erfindung wird im folgenden anhand der Zeichnung näher beschrieben. Darin zeigen
- Fig. 1: eine Demodulationsschaltung gemäß der eingangs genannten DE-OS 4011894,
- Fig. 2: eine Schaltung, bei der die Demodulationstabelle erfindungsgemäß modifiziert ist und
- Fig. 3: Signalverläufe innerhalb der Schaltungen gemäß Fig. 1, 2.

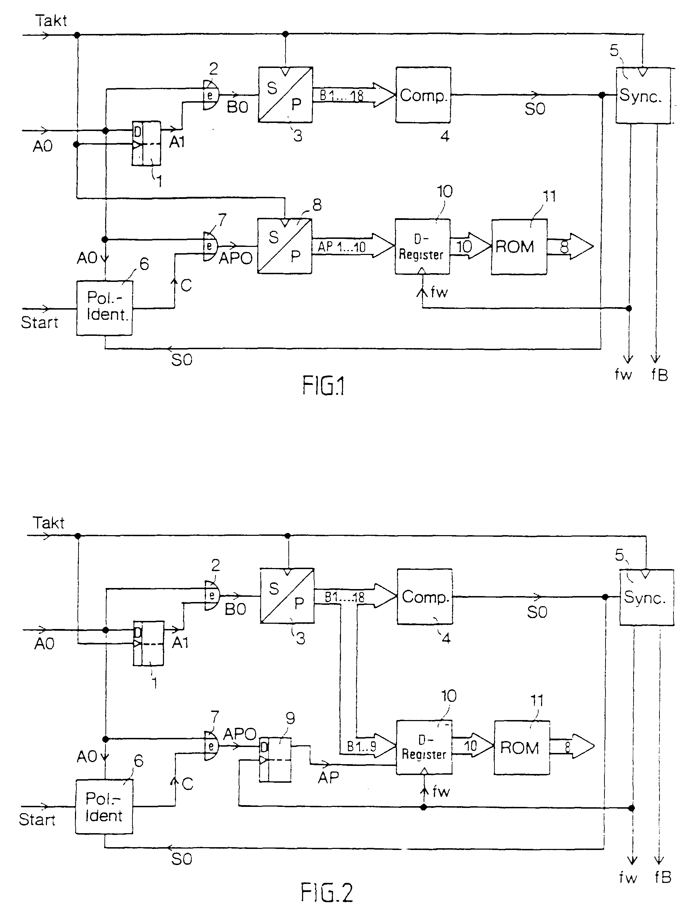

Fig. 1 zeigt eine herkömmliche Demodulationsschaltung für ein Signal gemäß der am 17.10.91 veröffentlichten DE-OS 40 11 894. Der obere Schaltungsteil 1...5 dient der Synchronisierung, im unteren Teil der Schaltung wird die 8/10-Demodulation durchgeführt. Die Erkennung der Synchronsignale ist polaritätsunabhängig, indem das Muster der Pegelübergänge verwendet wird. Hierzu dienen das Flip-Flop 1 und das EXOR-Gatter 2. Das Bitmuster am Ausgang des EXOR-Gatters 2 stellt das Muster der Pegelübergänge dar. Mit Hilfe des Seriell-Parallel-Wandlers 3 und des Comparators 4 wird ermittelt, wann das Muster der Pegelübergänge mit dem festgelegten Synchronmuster übereinstimmt. Bei Übereinstimmung erscheint am Comparatorausgang der Impuls SO. Dieser Impuls dient zur Phaseneinstellung des Worttaktes fw und des Blocktaktes fB in der Synchronisierschaltung 5. Eine für die Schrägspuraufzeichnung geeignete Synchronisationsschaltung ist z.B. in der am 12.12.91 veröffentlichten DE-OS 40 18 605.9 beschrieben.

Der Impuls SO wird außerdem zur Identifizierung der Signalpolarität benutzt. In der Schaltung 6 wird mit Hilfe von SO der Wert eines bestimmten Bits ermittelt, dessen Sollwert bekannt ist. Das Eingangssignal AO wird dann mit Hilfe des EXOR-Gatters 7 auf die richtige Polarität eingestellt. Der Wert des Ausgangssignals C der Polaritätsidentifikationsschaltung 6 ist nicht veränderbar, solange nicht die Möglichkeit besteht, daß eine Polaritätsveränderung eingetreten ist. Sofern diese Möglichkeit besteht, wird ein neuer Identifikationsvorgang gestartet. Die für die Erzeugung des Startsignals erforderliche Logik ist den jeweiligen Verhältnissen anzupassen.

Vom Ausgang des EXOR-Gatters 7 wird das Signal mit richtiger Polarität dem Eingang des Seriell-Parallel-Wandlers 8 zugeführt. Mit jedem Bittakt werden die letzten 10 aufeinanderfolgenden Bits dieses Signals an die D-Eingänge des Registers 10 gelegt. Der Worttakt fw sorgt dafür, daß jeweils die zu einem 10-Bit-Wort gehörenden Bits für die Dauer eines Wortes an den Adresseneingängen des ROM 11 liegen. Am Ausgang des ROM ist dann das dem Codewort zugeordnete 8-Bit-Datenwort verfügbar. Die Demodulationstabelle im ROM 11 ist hier für die in der Modulationstabelle verwendeten Codewörter aufgestellt.

Fig. 2 zeigt eine Schaltung, bei der die Demodulationstabelle im ROM 11 für von der Modulationstabelle abweichenden Codewörter aufgestellt ist. Nur das erste Bit jedes Codewortes wird über die Polaritätskorrektur unverändert übernommen. Die restlichen 9 Bit stellen das Muster der Pegelübergänge des Originalcodewortes dar. Sie können dabei den Ausgängen des Seriell-Parallel-Wandlers 3 entnommen werden. Statt des Seriell-Parallel-Wandlers 8 ist nur noch ein Flip-Flop 9 für die Speicherung des ersten Bits der Codewörter für die Dauer eines Codewortes erforderlich. Durch die abgeänderte Tabelle, die keinen Mehraufwand bedeutet, kann also besonders bei langen Codewörtern der Schaltungsaufwand erheblich vermindert werden.

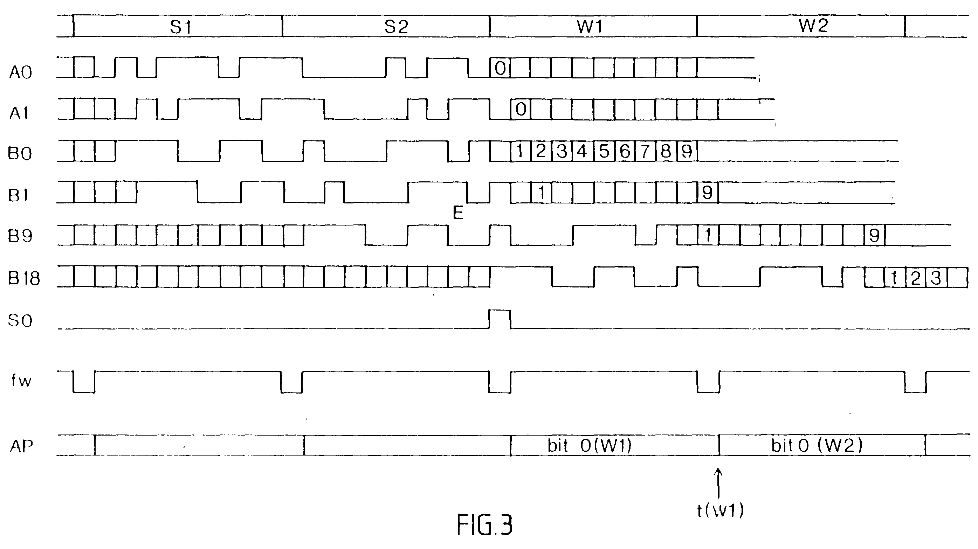

Fig. 3 zeigt einige Signalverläufe innerhalb der Schaltungen. Die oberste Zeile markiert die Wortgrenzen des Eingangssignals AO. Die Wörter S1 und S2 bilden das Synchronsignal, das hier aus 20 Bits besteht. Das erste Bit des Synchronsignals ist zwecks Anpassung der digitalen Summe veränderbar, außerdem kann das Synchronmuster auch umgepolt erscheinen. Für Signalbereiche, in denen eine Polaritätsidentifizierung durchgeführt werden kann, z.B. im Einlaufbereich einer Schrägspuraufzeichnung, ist jedoch die Polarität des Synchronmusters festgelegt. t(W1) ist der Zeitpunkt, zu dem das modifizierte Codewort W1 in das Register 10 von Fig. 2 eingelesen wird. Bit 0 ist das polaritätskorrigierte erste Bit des Originalcodewortes W1, während die Bits 1... 9 das Muster der Pegelübergänge von W1 darstellen.

## Patentansprüche

1. Demodulator für einen mit Hilfe einer Modulationstabelle erzeugten m/n-Code, bei dem m-bit-Datenwörtern n-bit-Codewörter zugeordnet sind, die Codewörter blockweise übertragen werden und zwischen den Codewortblöcken Bitmuster für die Wort- und Blocksynchronisierung angeordnet sind, **dadurch gekennzeichnet**, daß die Demodulationstabelle (im ROM 11; Fig. 2) für Codewörter aufgestellt ist, die gegenüber den n-bit-Codewörtern der Modulationstabelle verändert sind, indem die Demodulationstabelle in der Weise aufgestellt ist, daß sie als Eingangsbitmuster nicht das in der Modulationstabelle verzeichnete n-bit-Codewort erfordert, sondern ein Bitmuster, bei dem n-1 Bits das Muster der Pegelübergänge des n-bit-Codewortes darstellen und ein Bit aus dem n-bit-Codewort übernommen ist, daß ferner eine Schaltung (1 bis 4; Fig. 2) zur Erkennung der Synchronsignale vorgesehen ist, die die Muster der Pegelübergänge auswertet und die zusätzlich auch n-1 Bits des n-bit-Eingangsbitmusters für die Demodulationstabelle liefert, und daß das fehlende Bit des Eingangsbitmusters durch ein Bit des n-bit-Codewortes dargestellt wird, wobei eine Polaritätskorrekturschaltung (6, 7, 9; Fig. 2) den richtigen Binärwert dieses Bits sicherstellt.

2. Demodulator nach Anspruch 1, wobei das fehlende Bit des Eingangsbitmusters durch das erste Bit des n-Bit-Codewortes dargestellt wird.

3. Demodulator nach Anspruch 2, wobei die Schaltung (1 bis 4; Fig. 2) zur Erkennung der Synchronsignale auf n-1 parallelen Leitungen die Pegelübergangsmuster der Codewörter für die Demodulationstabelle liefert.

4. Demodulator nach Anspruch 2 oder 3, wobei für eine Übertragung mit korregierbarer Signalpolarität das erste Bit der Codewörter über die Polaritätskorrekturschaltung (6, 7, 9; Fig. 2) dem die Demodulationstabelle enthaltenden ROM (11; Fig. 2) zugeführt wird.

## Claims

1. Demodulator for an m/n code produced with the help of a modulation table, wherein n bit code words are assigned to m bit data words, the code words are transmitted in blocks and bit patterns are arranged between the code words for synchronising the words and blocks, characterised in that, the demodulation table (in ROM 11; Fig. 2) is set up for code words that are altered vis a vis the n bit code words of the modulation table in that the demodulation table is set up in such manner that it does not require the n bit code word entered in the modulation table as an input bit patttern but rather, a bit pattern in which n-1 bits represent the sample of the level transitions in the n bit code word and one bit is transferred from the n bit code word, that furthermore, there is provided a circuit (1 to 4; Fig. 2) for identifying the synchronisation signals, which said circuit evaluates the samples of the level transitions and in addition also delivers n-1 bits of the n bit input bit pattern for the demodulation table, and that the missing bit in the input bit pattern is represented by one bit of the n bit code word whereby a polarity correcting circuit (6, 7, 9; Fig. 2) ensures the correct binary value for this bit.

2. Demodulator in accordance with Claim 1, wherein the missing bit in the input bit pattern is represented by the first bit of the n bit code word

3. Demodulator in accordance with Claim 2, wherein the circuit (1 to 4; Fig. 2) for identifying the synchronisation signals delivers the level transition patterns of the code words for the demodulation table on n-1 parallel leads.

4. Demodulator in accordance with Claim 2 or 3, wherein for a transmission with correctable signal polarity the first bit of the code words is supplied to the ROM (11; Fig. 2) containing the demodulation table via said polarity correcting circuit (6, 7, 9; Fig. 2).

## Revendications

1. Démodulateur pour code m/n généré à l'aide d'un tableau de modulation, dans lequel des mots de code n sont associés aux mots de données m, les mots de code sont transmis bloc par bloc et des échantillons binaires pour la synchronisation des mots et des blocs sont placés entre les blocs de mots de code, **caractérisé en ce que** le tableau de démodulation (dans la mémoire ROM 11, figure 2) est établi pour des mots de code qui sont modifiés en fonction des mots de code de n bits du tableau de modulation, alors que le tableau de démodulation est établi de telle sorte qu'il exige comme échantillon binaire d'entrée non pas le mot de code de n bits défini dans le tableau de modulation, mais un échantillon binaire dans lequel n-1 bits représentent l'échantillon des changements de niveau du mot de code de n bits et dans lequel 1 bit est extrait du mot de code de n bits ; également caractérisé en ce qu'un circuit (1 à 4, figure 2) de reconnaissance des signaux de synchronisation est prévu et traite l'échantillon des changements de niveau et fournit en outre n-1 bits de l'échantillon binaire d'entrée pour le tableau de démodulation ; et caractérisé en ce que le bit manquant de l'échantillon binaire d'entrée est représenté par un bit du mot de code de n bits, le circuit de correction de la polarité (6, 7, 9 ; figure 2) assurant ici la valeur binaire correcte de ce bit.

2. Démodulateur selon la revendication 1, **caractérisé en ce que** le bit manquant de l'échantillon binaire d'entrée est représenté par le premier bit du mot de code de n bits.

3. Démodulateur selon la revendication 2, **caractérisé en ce que** le circuit (1 à 4, figure 2) de reconnaissance des signaux de synchronisation foumit l'échantillon des changements de niveau des mots de code pour le tableau de démodulation sur n-1 lignes parallèles.

4. Démodulateur selon la revendication 2 ou 3 **caractérisé en ce que** pour une transmission avec polarité de signal pouvant être corrigé, le premier bit de chaque mot de code est transmis par le circuit de correction de la polarité (6,7,9; fig. 2) à la mémoire ROM (11; fig. 2) contenant le tableau de démodulation.
